# EUROPEAN PATENT APPLICATION

(11) **EP 2 998 599 A1**
(43) Date of publication of application: **23.03.2016**
(21) Application number: 14797253.3
(22) Date of filing: 14.05.2014
(51) Int. Cl.: F16C 33/78, F16C 19/18, F16J 15/32, F16J 15/447

(54) **ROLLING BEARING UNIT WITH COMBINATION SEAL RING**

(30) Priority: 15.05.2013 JP 2013102670
(71) Applicant: NSK Ltd., Tokyo 141-8560 (JP)
(72) Inventor: SHIONO Yasuhiro, Fujisawa-shi Kanagawa 251-8501 (JP); WAKABAYASHI Tatsuo, Fujisawa-shi Kanagawa 251-8501 (JP)
(74) Representative: Grünecker Patent- und Rechtsanwälte PartG mbB
(86) International application number: PCT/JP2014/062864
(87) International publication number: WO 2014/185458

(57) **Abstract**

In order to implement a structure capable of ensuring the movement of a seal lip (22a) provided in a seal ring (17a) by preventing the entry of foreign matter into a seal interior space (26a) between a slinger (16) and the seal ring (17a) which constitute a combination seal ring (12a), a labyrinth seal (27a) is provided between the outer peripheral edge of a rotation-side circular ring section (19) constituting the slinger (16) and the inner peripheral surface of a stationary side cylindrical section (23) of a cored bar (20) constituting the seal ring (17a). Further, in a portion which is a part of an elastic material (21a) constituting the seal ring (17a) and is located between the labyrinth seal (27a) and the seal lip (22a) being a side lip, an auxiliary seal lip (32) having lower rigidity than the seal lip (22a) is provided. The total axial length of the auxiliary seal lip (32) in a free state is set to 5.5 to 7.5 times the thickness thereof, and the proportion of an interference is set to the range of 0-20% of the total axial length in a free state.

## Description

### TECHNICAL FIELD

The invention relates to a rolling bearing unit for supporting, for example, a vehicle wheel rotatably connecting with a suspension and, specifically, to an improved rolling bearing unit with a combination seal ring interposed between the mutually opposed peripheral surfaces of a rotational side bearing ring and a stationary side bearing ring for closing the end opening of a bearing internal space with multiple rolling elements set therein using a combination seal ring constituted of a slinger and a seal ring.

### BACKGROUND ART

### [Description of Prior art]

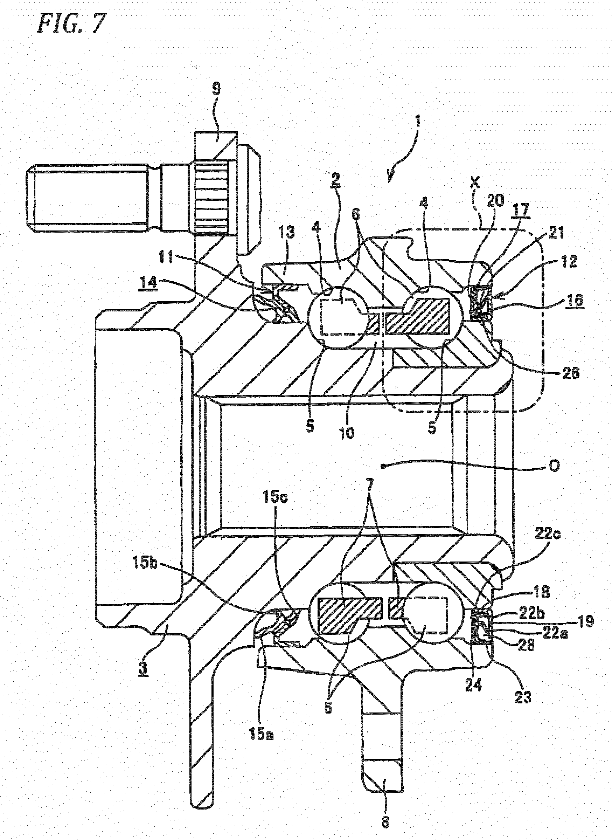

As a rolling bearing unit for supporting a vehicle wheel or the like rotatably connecting with a suspension, for example, the patent document I discloses a rolling bearing unit for wheel supporting shown in Fig. 7. In the rolling bearing unit 1 of Fig. 7, an outer ring 2 serving as a stationary side bearing ring and a hub 3 serving as a rotational side bearing ring are arranged coaxially with each other. Between double row outer ring raceways 4, 4 formed on the inner peripheral surface of the outer ring 2 to serve as stationary side raceways and double row inner ring raceways 5, 5 formed on the outer peripheral surface of the hub 3 to serve as rotation side raceways, there are interposed multiple balls 6, 6 serving as rolling elements in each row. The balls 6, 6 are rollably held by cages 7, 7 respectively. With this structure, the hub 3 is rotatably supported on the inside diameter side of the outer ring 2. To support a wheel or the like rotatably connecting with a suspension, a stationary side flange 8 formed on the outer peripheral surface of the outer ring 2 is screwed to the suspension, and a braking rotor such as the wheel and a disk rotor is screwed to a rotation side flange 9 formed on the outer peripheral surface of the outboard end of the hub 3("outboard" with respect to the axial direction means the left side of the drawings providing the width-direction outside of a vehicle with the same bearing unit assembled thereto. Meanwhile, the right side of the drawings providing the width-direction width direction inside of the vehicle is called "inboard" with respect to the axial direction).

Between the inner peripheral surface of the outer ring 2 and the outer peripheral surface of the hub 3, the whole peripheries of the two end openings of a bearing internal space 10 are respectively closed by a seal ring 11 and a combination seal ring 12. In the seal ring 11 for closing the outboard end side opening of the bearing internal space 10, an elastic member 14 made of elastomer such as rubber is reinforced by a metal insert 13 made of a metal plate, thereby providing an annular shape as a whole. The elastic member 14 has multiple (in the illustrated example, three) seal lips 15a, 15b and 15c. While the metal insert 13 is internally tight fitted to the outboard end of the inner peripheral surface of the outer ring 2, the tip end edges of the seal lips 15a, 15b and 15c are respectively sliding contacted with the whole periphery of the inboard surface of the rotation side flange 9 or the outer peripheral surface of the intermediate portion of the hub 3.

Meanwhile, the combination seal ring 12 is a combination of a slinger 16 and a seal ring 17. The slinger 16 is formed by burring from a metal plate such that its section has an L-like shape and its whole shape provides an annular shape, while it includes a rotational side cylindrical part 18 and a rotational side disk part 19 bent outward in the diameter direction from the inboard end edge of the rotational side cylindrical part 18. The rotational side cylindrical part 18 is externally tight fitted into the outside of the axial inner end of the hub 3 (an inner ring constituting the hub 3 together with a hub main body), whereby the slinger 16 is fixed to the hub 3. The seal ring 17 includes a metal-plate-made insert 20 and an elastic member 21. The elastic member 21 includes multiple (in the illustrated example, three) seal lips 22a, 22b and 22c. The metal insert 20 is formed by burring from a metal plate such that its section has an L-like shape and its whole shape provides an annular shape, while it includes a stationary side cylindrical part 23 and a stationary side disk part 24 bent inward in the diameter direction from the axial outer end edge of the stationary side cylindrical part 23. The stationary side cylindrical part 23 is internally tight fitted into the axial inner end of the outer ring 2, whereby the seal ring 17 including the metal insert 20 is fixed into the outer ring 2. In this state, the tip end edge of the seal lip 22a has slide contact with the whole periphery of the outboard surface of the rotational side disk part 19 and the tip end edges of the seal lips 22b and 22c have slide contact with the whole periphery of the rotational side cylindrical part 18, respectively.

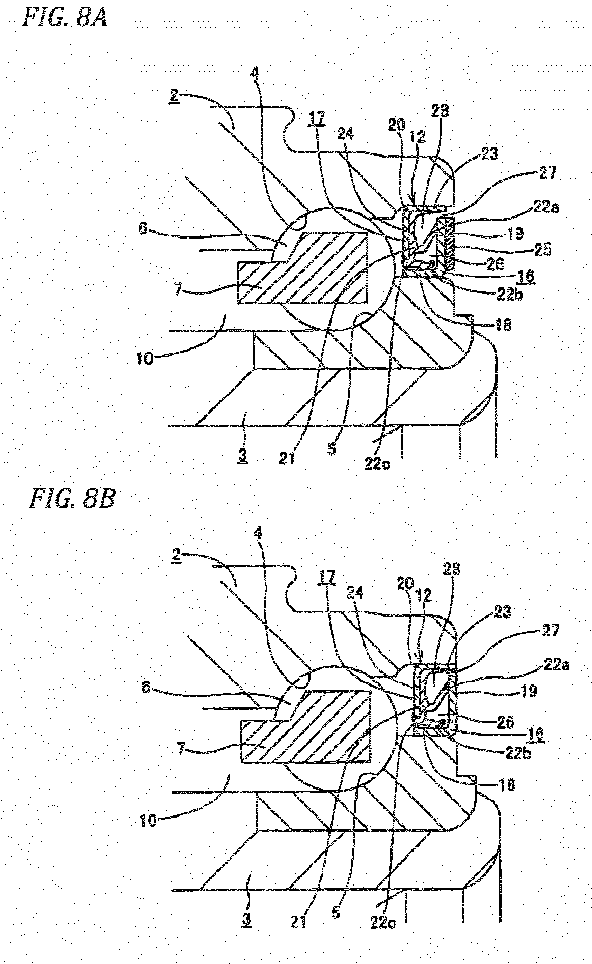

In some cases, as shown in Fig. 8A, a disk shaped encoder 25 is attached and fixed to the whole periphery of one (inboard surface) (which is opposite to the bending direction of the rotational side cylindrical part 18) of the axial two side surfaces of the rotational sidedisk part 19 of the slinger 19 constituting the above combination seal ring 12. This encoder 25 is made of a permanent magnet such as a rubber magnet or a plastic magnet in which magnetic powder is dispersed in polymer material such as rubber or synthetic resin, while it is magnetized in the axial direction. The magnetizing direction varies alternatively and equipartitionary with respect to the circumferential direction. Therefore, in the axial inside surface of the encoder 25 serving as a detected surface, S and N poles are arranged alternately and equipartitionary with respect to the circumstantial direction. The detecting part of a rotation detect sensor (not shown) is disposed opposed to the detected surface of the encoder 25, thereby enabling measurement of the rotation speed of a wheel rotating together with the hub 3. A signal representing the measured wheel rotation speed is used to control the drivingstabilizer of a vehicle such as an antilock brake system (ABS) or a traction control system (TCS). Since the structure and operation of such rotation speed detection device are well known and are not involved with the gist of the invention, illustration and specific description thereof are omitted.

Meanwhile, when detection of the wheel rotation speed is not required or when such rotation speed can be detected by other part, as shown in Fig. 8B, no encoder is provided on the slinger 16.

Anyway, the seal ring 11 and combination seal ring 12 are used to close the whole peripheries of the axial two end openings of the bearing internal space 10, thereby preventing leakage of grease existing within the bearing internal space 10 and invasion of foreign substances such as moisture and dust existing in the outside space into the bearing internal space 10.

To assure the durability of the rolling bearing unit 1 for wheel supporting, it is important to assure the sealing performance of the seal ring 11 and combination seal ring 12. Meanwhile, the seal ring 11 and combination seal ring 12 are used under a severe condition that, in use, muddy water or the like can splash on them. Especially, in the combination seal ring 12, there is a possibility that the moisture of muddy water coming into a seal internal space 26 surrounded by the slinger 16 and seal ring 17 can evaporate and only the solid content thereof can stay within the seal internal space 26. In the prior structure shown in Figs. 7, 8A and 8B, since the volume of such entrance space 28 of the seal internal space 26 as exits further in the diameter-direction radially outside portion than the seal lip 22a existing on the most outside diameter side and communicates with an outer space through a labyrinth seal 27 is large, the quantity of the solid content collecting within the entrance space 28 is easy to increase. And, the solid content collecting within the entrance space 28 has a possibility that it attaches to the seal lip 22a as well to thereby impair the movement of the seal lip 22a. This raises a possibility that part of the tip end edge of the seal lip 22a can float up from the axial outside surface of the rotational side disk part 19 of the slinger 16 and thus foreign substances such as the mud slurry or the like can get into the further deeper side of the seal internal space 26 through the floating part. Such phenomenon is particularly remarkable in muddy water including clay mud easy to condense when moisture evaporates.

When the clearance dimension of the labyrinth seal 27 (width dimension in the diameter direction) is reduced, the quantity of foreign substances such as muddy water coming into the entrance space 28 can be reduced. However, there is a limit to reduction of this clearance dimension. That is, when the clearance dimension of the labyrinth seal 27 is reduced extremely, there is a possibility that, due to a moment load by turning acceleration of a vehicle, the outer ring 2 and hub 3 are inclined relative to each other to reduce the distance of the labyrinth seal 27, thereby causing the end edge of the rotational side disk part 19 to heavily (strongly) touch the inner peripheral surface of the stationary side cylindrical part 23. Therefore, in the conventional structure shown in Figs. 7, 8A and 8B, it is difficult to reduce the clearance dimension of the labyrinth seal 27 excessively.

As a structure to improve the seal performance of a combination seal ring, for example, the patent document 2 discloses a structure that the tip end edge of a second seal lip constituting a second seal ring externally fitted to an outer ring is slide contacted with the whole periphery of such side surface of the rotational side disk part of a slinger as is opposed to the seal ring. According to this structure, invasion of foreign substances into the seal internal space can be prevented sufficiently but the number of parts increases to thereby increase the cost. Also, the installation space for the second seal ring increases and thus, for prevention of interference with other parts to be provided adjacent to a rolling bearing unit with a combination seal ring, there is a possibility that design freedom can be limited. Further, as the second seal lip, a seal lip having rigidity equivalent to that of a seal lip originally provided on the combination seal ring is added to the originally provided seal lip. This increases the slide contact area of the structure, thereby disadvantageously increasing the rotational resistance (dynamic torque) thereof.

### [Description of Unknown Prior Invention]

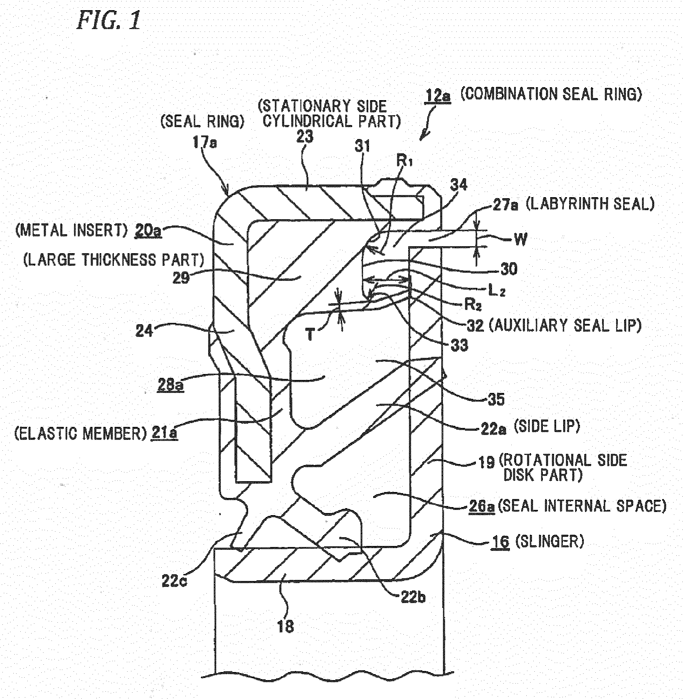

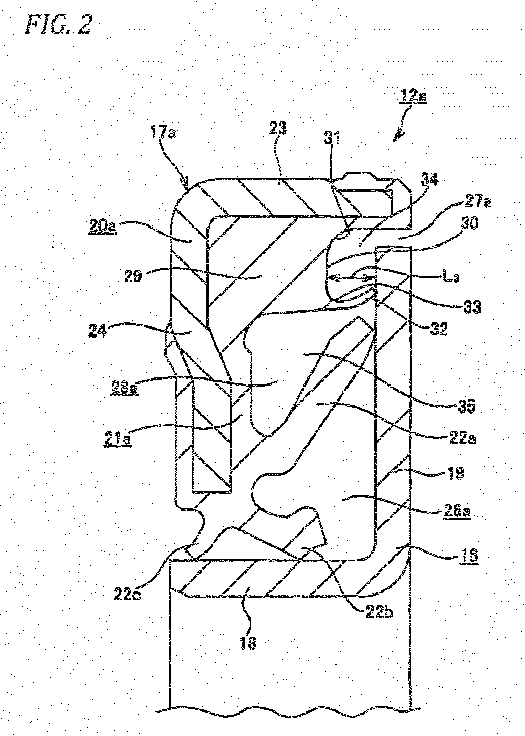

In view of the above circumstances, description is given of an example of the structure of a prior invention relating to a rolling bearing unit with a combination seal ring disclosed in the JPA No. 2012-257064 invented prior to the invention with reference to Figs. 1 and 2 showing the embodiment of the invention.

In the prior invention, the outboard end opening of a rolling bearing unit with a combination seal ring is closed by a combination seal ring 12a shown in Figs. 1 and 2. The combination seal ring 12a includes a labyrinth seal 27a between the outer peripheral edge of a rotational side disk part 19 constituting a slinger 16 and a partial inner peripheral surface of an elastic member 21a covering the inner peripheral surface of a stationary side cylindrical part 23 constituting a metal insert 20a of a seal ring 17a. The elastic member 21a includes a large thickness part 29 in its portion the radially outside and outboard of which are separated by the inner peripheral surface of the stationary side cylindrical part 23 and the outside-diameter side half section of the inboard surface of a stationary side disk part 24 constituting the metal insert 20a together with the stationary side cylindrical part 23, while the radial and axial thickness dimensions of the large thickness part 29 are larger than those of the other parts. Of the elastic member 21a, a circular ring-shaped step surface 30 constituting the axial inner end face of the large thickness part 29 and a portion covering the near-to-tip-end portion (axial inner half section) of the inner peripheral surface of the stationary side cylindrical part 23 are smoothly continued with each other by an outside-diameter side curved surface 31 (corner R) the section of which is a quarter arc-like shape. The radius of curvature R₁ of the section shape of the outside-diameter side curved surface 31 is set equal to or larger than the diameter-direction width dimension W of the labyrinth seal 27a (R₁ ≥ W). Thus, foreign substances having invaded into a space portion existing on the outside diameter side of an auxiliary seal lip 32 (to be discussed below) through the labyrinth seal 27a can be easily returned to the side of the labyrinth seal 27a.

Also, toward the rotational side disk part 19 from the radially inner end portion of the step surface 30, there is extended the auxiliary seal lip 32 (which is formed integrally with the elastic member 21a together with the respective seal lips 22a - 22c) used to prevent attachment of foreign substances to a seal lip 22a serving as a entrance space seal lip stated in Claims. The auxiliary seal lip 32 has a partially conical shape slantingly extending while widening in a direction where the diameter increases inward in the axial direction with the step surface 30 as the start end thereof. The base end outer peripheral surface of the auxiliary seal lip 32 is smoothly continued with the step surface 30 by an inside diameter side curved surface 33 having a quarter arc-shaped section shape. The radius of curvature R₂ of the section shape of the inside diameter side curved surface 33 is restricted property from the viewpoint that, while restricting stress applied to the base end of the auxiliary seal lip 32, it can be easily flexed properly, and further from the viewpoint that foreign substances having invaded through the labyrinth seal 27a into the space existing on the outside diameter side of the auxiliary seal lip 32 can be easily returned to the side of the labyrinth seal 27a. Thus, the radius of curvature R₂ of the section shape of the inside diameter side curved surface 33 is set equal to or slightly larger than the thickness T of the base end of the auxiliary seal lip 32 (R₂ ≥ T).

Also, in the prior invention, the section shape of the auxiliary seal lip 32 provides a wedge shape the thickness dimension of which reduces toward its tip end edge. And, the thickness dimension of the auxiliary seal lip 32 is set smaller than the thickness dimension of the seal lip 22a. Specifically, the thickness dimension of the base end of the seal lip 32 that is the thickest portion thereof is set equal to or less than 1/2 of the thickness dimension of the base end of the seal lip 22a that is the thinnest portion thereof, preferably, equal to or less than 1/3 of the latter but, in consideration of vulcanization performance, equal to or more than 1/5 of the latter. Further, the interference of the auxiliary seal lip 32 is set smaller than that of the seal lip 22a. Specifically, in a free state shown in Fig. 1, the axial height (the axially projecting amount toward the rotation side circular ring part 19) of the auxiliary seal lip 32 is set sufficiently smaller than the axial height of the seal lip 22a. This structure prevents an increase in friction resistance produced due to provision of the auxiliary seal lip 32.

A entrance space 28, which exists nearer in the diameter-direction entrance portion than the seal lip 22a and communicates with an external space through the labyrinth seal 27a is separated by the auxiliary seal lip 32 having the above structure. And, the auxiliary seal lip 32 intervenes between the seal lip 22a and labyrinth seal 27a. In other words, in a portion which exists in the radially outer end of the entrance space 28 and communicates with the labyrinth seal 17a, there is formed a entrance small space 34 the axial outer end and inside-diameter side of which are separated by the step surface 30 and auxiliary seal lip 32. The inner and outer peripheral edges of the step surface 30 are smoothly continued with the inner and outer peripheral surfaces of the entrance small space 34 by the inside and outside diameter curved surfaces 33, 31, respectively. Further, the outer peripheral surface of the auxiliary seal slip 32 continuing from the inside diameter side curved surface 33 is inclined toward the tip end thereof in a direction for the labyrinth seal 27a. This structure enables conversion of the flow of foreign substances blown powerfully into the entrance small space 34 and return of them toward the labyrinth seal 27a.

According to the rolling bearing unit with a combination seal ring of the prior invention into which the above-structured combination seal ring 12 is incorporated, invasion of foreign substances such as mud slurry into the seal internal space 26a intervening between the slinger 16 and seal ring 17a can be prevented effectively. Especially, it is possible to prevent occurrence of a phenomenon that foreign substances can attach to the outer peripheral surface of the seal lip 22a existing nearest of the seal lips 22a - 22c to the labyrinth seal 27a, impair the behavior of the seal lip 22a and thus lower the seal performance thereof.

That is, the labyrinth seal 27a, the step surface 30 and auxiliary seal lip 32 separating the radially end face and inner peripheral surface of the entrance small space 34 can prevent invasion of foreign substances into a counter near-to-opening small space 35 of the entrance space 28 existing further toward the inside diameter side than the auxiliary seal lip 32. Even when foreign substances such as mud slurry pass powerfully in the axial direction through the labyrinth seal 27a and invade into the near-to-opening small space 34, the power of the foreign substances is weakened to thereby prevent them from colliding direct with the outer peripheral surface of the auxiliary seal lip 32. The foreign substances having invaded powerfully into the near-to-opening small space 34 from the labyrinth seal 27a flow along the outside diameter side curved surface 31, step surface 30 and inside diameter side curved surface 33 and are thereby weakened in power before they reach the outer peripheral surface of the auxiliary seal lip 32. Therefore, the auxiliary seal lip 32 can be prevented from being deformed by the foreign substances having invaded powerfully into the entrance small space 34 from the labyrinth seal 27a.

And, while in use, the tip end of the seal lip 22a is disposed adjacent and opposed to the inner peripheral surface of the auxiliary seal lip 32. Thus, even when some pressure is applied to the outer peripheral surface of the auxiliary seal lip 32, the auxiliary seal lip 32 is prevented from being reversed (being turned over) toward the inside diameter side. That is, although, when the internal pressure of the entrance small space 34 is increased by mud slurry or the like having invaded therein through the labyrinth seal 27a, the auxiliary seal lip 32 is going to deform toward the inside diameter side, the tip end of the seal lip 22a is contacted with the inner peripheral surface of the auxiliary seal lip 32 to support the auxiliary seal lip 32, thereby preventing the auxiliary seal lop 32 against deformation. Thus, the seal performance of the auxiliary seal lip 32 can be maintained in a stable level.

As described above, since, regardless of foreign substances having invaded into the entrance small space 34, the auxiliary seal lip 32 is prevented from deforming greatly inward in the diameter direction, there is no possibility that the foreign substances can pass through the auxiliary seal lip 32 and invade into the counter entrance small space 35. In other words, the foreign substance, which has invaded into the entrance small space 34, stays therein. And, a foreign substance, which has been guided to the outer peripheral surface of the auxiliary seal lip 32 by the outside diameter side curved surface 31, step surface 30 and inside diameter side curved surface 33, flows along the outer peripheral surface of the auxiliary seal lip 32 outward in the diameter direction toward the labyrinth seal 27a and is discharged to the external space through the labyrinth seal 27a. During this, the foreign substance (muddy water containing plenty of water) cleans the inside of the entrance small space 34, thereby preventing solid substances from being deposited within the entrance small space 34. This can prevent lots of solid substances from attaching to the seal lip 22a and impairing the movement thereof. Thus, the foreign substance invasion preventive effect into the seal lip 22a and thus the foreign substance attachment preventive effect to the seal lip 22a by the auxiliary seal lip 32 can be maintained long properly, thereby enabling ensuring over a long time the durability of the rolling bearing unit with the combination seal ring 12a incorporated therein.

Also, in a rolling bearing unit with a combination seal ring for wheel supporting, while a vehicle is running on a rough road or is turning, due to relative displacement between the outer ring with the seal ring 17a internally fitted and fixed thereto and the hub with the slinger 16 externally fitted and fixed thereto, the seal ring 17a and slinger 16 displace relative to each other, thereby increasing or decreasing the volume of the entrance small space 34. In the prior invention, since the volume of the entrance small space 34 is smaller than that of the counter entrance small space 35 and the distance from the center O (see Fig. 7) (which serves as the center of oscillation) of the relative displacement between the outer ring and hub is long, the volume change ratio of the entrance small space 34 caused by the relative displacement is large. Therefore, a pumping action provided by the volume change can be increased, thereby enabling effective discharge of the foreign substance deposited in the entrance small space 34 to the external space. In such pumping action, when the auxiliary seal lip 32 is a contact type seal lip, the air sealed in the counter entrance small space 35 supports the auxiliary seal lip 32, thereby preventing the foreign substance deposited in the entrance small space 34 from invading into the counter entrance small space 35. When the auxiliary seal lip 32 is a non-contact type seal lip having a slight clearance as well, the air existing in the counter entrance small space 35 flows out from the tip end of the auxiliary seal lip 32 outward in the diameter direction, thereby preventing the foreign substance deposited in the entrance small space 34 from invading into the counter entrance small space 35.

Also, of the inner peripheral surface of the large thickness part 29 of the elastic member 21a, a portion for separating the outside diameter side of the counter entrance small space 35 provides a partially conical concave surface having a diameter increasing axially inward toward the auxiliary seal lip 32. Therefore, supposing a foreign substance such as mud slurry passes through between the tip end edge of the auxiliary seal lip 32 and the axial inside surface of the slinger 16 and invades into the counter entrance small space 35, the foreign substance is guided along the inner peripheral surface of the large thickness part 29 to the slide contact portion or adjacent opposed portion between the auxiliary seal lip 32 and slinger 16. And, since the auxiliary seal lip 32 is small in interference and in thickness and is inclined outward in the diameter direction as it goes toward the tip end edge, its seal effect of stopping fluid or the like moving from the counter entrance small space 35 toward the entrance small space 34 is weak. Therefore, the foreign substance guided along the inner peripheral surface of the large thickness part 29 to the inner peripheral surface of the auxiliary seal lip 32 passes through the slide contact portion or adjacent opposed portion between the auxiliary seal lip 32 and slinger 16 from inward toward outward diametrically, is fed to the entrance small space 34, passes through labyrinth seal 27a and is discharged to the external space.

As described above, the structure of the prior invention, by provision of the auxiliary seal lip 32, can reduce as much as possible the amount of the foreign substance that reaches the outer peripheral surface of the seal lip 22a and remains attached thereto. The auxiliary seal lip 32 provided in order to obtain such operation/effect is smaller in thickness and interference than the seal lip 22a. This enables reduction of such increase in rotation torque of the rolling bearing unit with a combination seal ring as is caused by additional provision of the auxiliary seal lip 32.

Here, the radial dimension W of the labyrinth seal 27a interposed between the outer peripheral edge of the rotation side circular ring part 19 and the inner peripheral surface of the stationary side cylindrical part 23 is set such that, in the maximum distance assumed in design of the relative inclination between the outer ring and hub, they can be slightly contacted with each other. Since the inner peripheral surface of the stationary side cylindrical part 23 is covered by the elastic member 21a, even in such setting, there is no fear that the combination seal ring 12a can be damaged seriously. And, the minimum setting of the radial dimension W can enhance the seal performance of the labyrinth seal 27a, thereby enabling minimizing invasion of the foreign substance into the entrance small space 34.

However, even in the above structure of the prior invention, there is a chance for improvement from the viewpoint that adhesion of the foreign substance to the side lip (seal lip 22a) can be prevented more effectively to thereby extend the life of the combination seal ring. That is, even in the structure of the prior invention, the dimensions of the respective parts of the auxiliary seal lip are not restricted specifically, nor are the size of the interference restricted particularly except that it is set smaller than the interference of the side lip. Therefore, it is difficult to set the rigidity of the auxiliary seal lip for the optimum rigidity effective in performing the above-mentioned specific function of the auxiliary seal lip. Also, since the optimum interference varies according to the rigidity, it is also difficult to set the interference.

Here, the patent document 3 is the related art document which discloses the technology for setting the optimum size of the interference in order to enable the seal lip to perform the seal performance. According to the disclosure of the patent document 3, in a combination seal ring excluding an auxiliary seal lip, the ratio of the interference to the axial-direction whole length of a side lip in a free state is set equal to or larger than 20% (preferably 25%). However, the technology disclosed in the patent document 3 relates to a side lip which functions to prevent a foreign substance from invading into a bearing internal space. Therefore, the value of the interference considered to be proper for such side lip cannot be applied as it is to an auxiliary seal lip which is shorter in the whole length and is smaller in thickness dimension (lower in rigidity) than the side lip. Also, when the value of the interference is set large, there is a possibility that the tip end portion of the auxiliary lip can be deformed, that is, its phase in the circumferential direction can be shifted relative to the base portion thereof due to friction resistance produced in the slide contact portion between the tip end edge of the auxiliary seal lip and the axial outside surface of a rotation side circular ring part constituting a slinger. With such deformation, the whole axial length of the auxiliary seal lip, when the whole length is expressed by L₂, reduces from L₂ to L₂ cos α (α: shift angle in circumferential direction between tip end portion and base end portion), whereby the value of the interference lowers substantially and thus only the slide torque (seal torque) increases.

### RELATED ART REFERENCE

### PATENT DOCUMENT

Patent Document 1: JPA Publication No. 2007-85478
Patent Document 2: JPA Publication No. 2008-151311
Patent Document 3: JPA Publication No. 2006-349009

### SUMMARY OF THE INVENTION

### PROBLEMS TO BE SOLVED BY THE INVENTION

In view of the above circumstances, the invention aims at realizing a structure which can effectively prevent attachment of a foreign substance to a side lip to thereby extend the life of a a combination seal ring, and also can reduce sliding torque produced by an auxiliary seal lip.

### MEANS FOR SOLVING THE PROBLEMS

A rolling bearing unit with a combination seal ring of the invention includes: a rotation side bearing ring and a stationary side bearing ring; multiple rolling elements; and, a combination seal ring.

The rotation and stationary side bearing rings rotate relative to each other while they are disposed concentrically with each other.

The rolling elements are rollably disposed between a rotation side raceway and a stationary side raceway respectively formed on the mutually opposed peripheral surfaces of the rotation and stationary side bearing rings.

The combination seal ring is used to close the end opening of a bearing internal space intervening between the mutually opposed peripheral surfaces of the rotation and stationary side bearing rings and is constituted of a slinger and a seal ring.

The slinger is fitted and fixed to such portion of the peripheral surface of the rotation side bearing ring as is opposed to the peripheral surface of the stationary side bearing ring and is formed by bending a metal plate such that it has an L-shaped section and has a circular ring shape as a whole, while it includes a rotation side cylindrical part and a rotation side disk part bent diametrically from the axial end edge of the rotation side cylindrical part toward the stationary side bearing ring. And, the rotation side cylindrical part is fitted onto the peripheral surface of the rotation side bearing ring and is thereby fixed to the rotation side bearing ring.

Also, the seal ring is fitted and fixed to such portion of the stationary side bearing ring as is opposed to the slinger and includes a metal insert to be fitted and fixed to the stationary side bearing ring and an elastic member with its base end portion supported on the metal insert and having multiple seal lips. The metal insert is formed by burring from a metal plate such that it has an L-shaped section and has a disk shape as a whole, while it includes a stationary side cylindrical part and a stationary side disk part bent diametrically from the axial end edge of the stationary side cylindrical part toward the rotation side bearing ring. And, the stationary side cylindrical part is fitted into the peripheral surface of the stationary side bearing ring, whereby the metal insert is fixed into the stationary side bearing ring to thereby slide contact the tip ends of the seal lips with the whole periphery of the surface of the slinger.

Further, a labyrinth seal is interposed between the tip end side peripheral edge (peripheral edge disposed radially opposed to the rotation side cylindrical part) of the rotational side disk part and the peripheral surface of the stationary side cylindrical part.

Especially, an auxiliary seal lip, having lower rigidity than at least a side lip providing a seal lip existing nearest to the labyrinth seal in the seal lips, is formed integrally with the elastic member in a portion of the base part of the elastic member as is nearer to the stationary side cylindrical part than the seal lips. Also, the tip end edge of the auxiliary seal lip is slide contacted with or is adjacently opposed to the whole periphery of the axial side surface of the rotation side circular ring part. And, the whole axial length of the auxiliary seal lip in its free state is restricted to the range of 5.5 ~ 7.5 times the thickness dimension of the auxiliary seal lip (the thickness dimension of the base end portion where the thickness dimension is largest).

In enforcing the above-structure invention, preferably, like the invention according to, for example, Claim 2, the ratio of the axial interference of the auxiliary seal lip to the whole axial length of the free-state auxiliary seal lip may be restricted to the range of 0 ~ 20%.

More preferably, like the invention according to Claim 3, the ratio of the interference may be restricted to the range of 10 ~ 20%.

### ADVANTAGE OF THE INVENTION

In the above-structured rolling bearing unit with a combination seal ring of the invention, since the axial-direction whole length of the free-state auxiliary seal lip is restricted to 5.5 ~ 7.5 times the thickness dimension, the size of rigidity can be set for the size most suitable for fulfilling the function effectively as the auxiliary seal lip. Therefore, since the quantity of the foreign substance such as muddy water reaching the side lip can be minimized, attachment of lots of solids to the side lip can be prevented, thereby enabling prevention of impairment of movement of this seal lip. This enables the side lip to fulfill proper seal performance over a long time, thereby enabling extended life of the combination seal ring. Also, even when the tip end edge of the auxiliary seal lip rubs against the rotation side circular ring part of the slinger, frictional force acting on the rubbing portion can be reduced. Thus, sliding torque caused by the auxiliary seal lip can be reduced.

Also, with the invention according to Claims 2 and 3, interference excessive increase can be prevented, thereby enabling effective prevention of circumferential deformation of the auxiliary seal lip tip end portion relative to the base end portion thereof. This can prevent the interference of the auxiliary seal lip against substantial reduction. Therefore, shortened life of the combination seal ring can be prevented and slide torque increase can be restricted effectively.

### BRIEF DESCRIPTION OF THE DRAWINGS

Fig. It is a partial section view of a combination seal ring used in an example of an embodiment of the invention, with the respective seal lips shown in their free states.
Fig. 2 is a partial section view of the above seal ring, showing its use state where the seal lips are elastically deformed when combined with a slinger.
Fig. 3A is a partial section view of a sample, in a test conducted to confirm the effects of the invention, used as a comparison example out of the technical scope of the invention.
Fig. 3B is a partial section view of a sample, in the above test, used as an embodiment within the technical scope of the invention.
Fig. 3C is a partial section view of a sample, in the above test, used as an embodiment within the technical scope of the invention.
Fig. 3D is a partial section view of a sample, in the above test, used as a comparison example out of the technical scope of the invention.
Fig. 3E is a partial section view of a sample, in the above test, used as a comparison example out of the technical scope of the invention.
Fig. 4 is a schematic section view of a seal component durability tester.
Fig. 5 is a schematic section view of a drag tester.
Fig. 6 is a graphic display of the results of the test of the invention.
Fig. 7 is a section view of an example of a conventional rolling bearing unit with a combination seal ring.
Fig. 8A is an enlarged view of the X portion of Fig. 7, showing an example of a conventional combination seal ring.
Fig. 8B is an enlarged view of the X portion of Fig. 7, showing an example of a conventional combination seal ring.

### MODES FOR CARRYING OUT THE INVENTION

### [Example of Mode]

Figs. 1 and 2 show an example of the mode of the invention. This example is characterized in that the relationship between the whole axial length of an auxiliary seal lip 32 in its free state and the thickness dimension thereof is restricted properly and the value of the interference thereof is restricted properly according to the relationship. The structures and operations of the remaining parts of the invention are similar to those of the above-described prior invention structure. Therefore, duplicate description thereof is omitted or simplified and thus description is given below mainly of the characteristics of this example.

A combination seal ring 12a to be combined into the rolling bearing unit with the combination seal ring of this example is a combination of a slinger 16 and a seal ring 17a. The slinger 16 is formed by burring from a metal plate such that its section has an L-like shape and it has a circular ring shape as a whole, while it includes a rotational side cylindrical part 18 and a rotational side disk part 19. The seal ring 17a includes a metal insert 20a made of a metal plate and an elastic member 21a which is made of elastomer such as rubber and the whole periphery of which is adhered to and supported by the metal insert 20a. The elastic member 21a includes three seal lips 22a, 22b and 22c provided in its radially inside portion, a large thickness part 29 provided in its radially outside portion, and an auxiliary seal lip 32 so provided as to extend toward radially inward from the radially inner end of the axially inner end face (step surface 30) of the large thick part 29.

While the slinger 16 is externally tight fitted to the axial inner end of the hub 3 (see Figs. 7 and 8) and the seal ring 17a is internally tight fitted onto the axial inner end of the outer ring (see Figs. 7 and 8), the tip end edge of the seal lip 22a is sliding contacted with the whole periphery of the axial outside surface of the rotational side disk part 19, and the tip end edges of the seal lips 22b and 22c are sliding contacted with the whole periphery of the outer peripheral surface of the rotation side cylindrical part 18. Also, the tip end edge of the auxiliary seal lip 32 is slide contacted with the whole periphery of the axial outside surface of the rotational side disk part 19 with an interference d. Here, the interference d can be obtained by d = L₂ - L₃, where L₂ expresses the whole axial length of the free-state auxiliary seal lip 32 (distance from the step surface 30 to the tip end edge) (see Fig. 1) and L₃ expresses the whole axial length of the assembled-state auxiliary seal lip 32 (see Fig. 2).

Particularly, in this embodiment, the whole axial length L₂ of the free-state auxiliary seal lip 32 is restricted to a length 5.5 - 7.5 times (preferably, 7.5 times) the thickness dimension T of the base end portion which is greatest in thickness dimension in the auxiliary seal lip 32. Also, the ratio of the axial interference d of the auxiliary seal lip 32 to the whole axial length L₂ of the free-state auxiliary seal lip 32 is restricted to the range of 0 ~ 20% (preferably, 10 ~ 20%).

In the above-structured rolling bearing unit with a combination seal ring of this example, since the whole axial length L₂ of the free-state auxiliary seal lip 32 is restricted to the range of 5.5 - 7.5 times the thickness dimension T of the base end portion, rigidity can be set for the optimum value enabling the auxiliary seal lip 32 to perform its function effectively. This can minimize the quantity of a foreign substance such as mud slurry reaching the seal lip 22a serving as a side lip, thereby preventing lots of solids from attaching to the seal lip 22a to interrupt the movement thereof. This enables the seal lip 22a to perform excellent seal performance over a long time, thereby extending the life of the combination seal ring 12a. Also, even when the tip end edge of the auxiliary seal lip 32 rubs against the rotational side disk part 19 of the slinger 16, friction force acting on such rubbing portion can be minimized. Thus, slide torque produced by the auxiliary seal lip 32 can be minimized.

Particularly, in this example, since the interference d is restricted to the range of 0 ~ 20% of the whole axial length L₂ of the free-state auxiliary seal lip 32, the interference can be prevented against excessive increase, thereby effectively preventing the tip end portion of the auxiliary seal lip 32 against circumferential deformation relative to the base end portion. This can prevent the interference of the auxiliary seal lip 32 from reducing substantially. Therefore, the lowered life of the combination seal ring 12a can be prevented and slide torque increase can be effectively prevented.

### [Test]

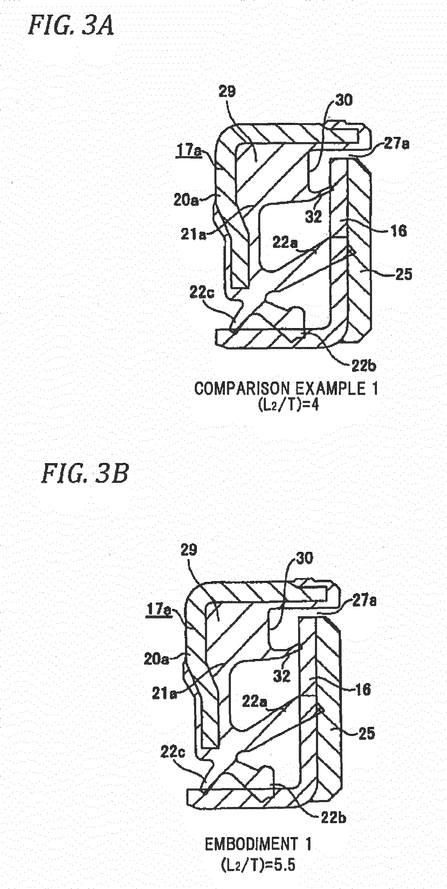

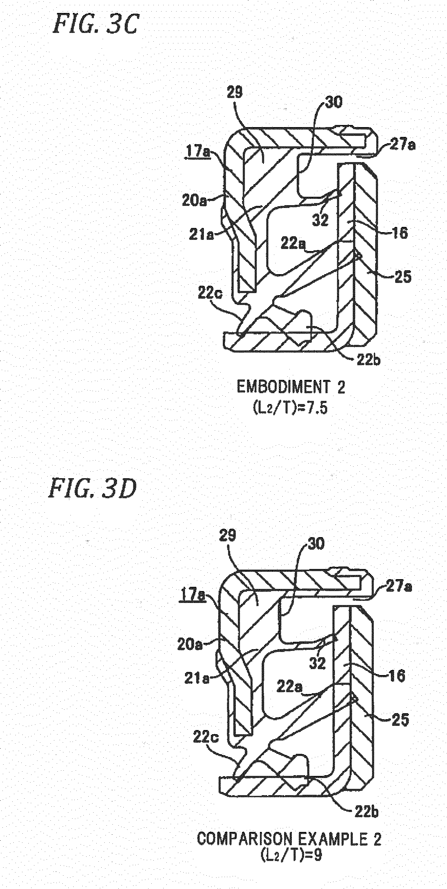

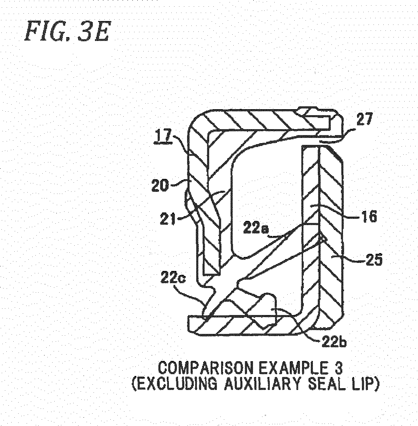

Next, description is given of a test conducted for confirmation of the effects of the invention. The test was conducted to check the relationship (L₂/ T) between the whole axial length and thickness dimension of the free-state auxiliary seal lip 32 and the influence of the size of the interference of the auxiliary seal lip 32 on the life and torque of the combination seal ring. In this test, there were prepared five combination seal ring samples shown in Figs. 3A ~ 3E each of which has an outside diameter of 75 mm, an inside diameter of 61 mm and an assembled width of 5 mm, with an encoder 25 attached to and supported on the axial inside surface of the slinger 16. Figs. 3B and 3C show embodiments 1 and 2 in which the whole axial length of the free-state auxiliary seal lip 32 is within the range of 5.5 ~ 7.5 times the thickness dimension. The value of (L₂/ T) in the embodiment 1 is 5.5 times, while the value of (L₂/T) in the embodiment 2 is 7.5 times. Meanwhile, Figs. 3A and 3D show comparison examples I and 2 in which the whole axial length of the free-state auxiliary seal lip 32 is out of the range of 5.5 ~ 7.5 times the thickness dimension. The value of (L₂/ T) in the comparison example 1 is 4 times, while the value of (L₂ / T) in the comparison example 2 is 9 times. And, Fig. 3E shows a comparison example 3 excluding the auxiliary seal lip 32. In the embodiments 1, 2 and comparison examples 1, 2, only the whole axial length of the free-state auxiliary seal lip 32 and the axial position of a step surface 30 (axial inner end face of a large thickness part 29) are different, whereas the thickness dimension of the auxiliary seal lip 32 is the same. Also, the dimensions and shapes of the three seal lips 22a, 22b and 22c except for the auxiliary seal lip 32 and those of the metal insert 20a and slinger 16 are the same in all of the embodiments 1, 2 and comparison examples 1 ~ 3.

Specifically, two kinds of tests, namely, a durability test and a torque test (which are described below) were conducted on a total of four samples, namely, the embodiments 1, 2 and comparison examples 1, 2, while, by adjusting the axial position of the slinger 16, changing the ratio of the axial interference of the auxiliary seal lip 32 to the whole axial length of the free-state auxiliary seal lip 32 by 5% in the range of 0-30%. However, when the axial position of the slinger 16 is adjusted in this manner, since not only the interference of the auxiliary seal lip 32 but also the interference of the seal lip 22a change, the change of the interference of the seal lip 22a influences the test results. Therefore, in order to remove the influence caused by the seal lip 22a, an interference equivalent to the interference given to the seal lip 22a when the interference of the auxiliary seal lip is set in the samples of the embodiments 1, 2 and comparison examples 1, 2 was given to the sample of the comparison example 3; and, the two tests, namely, the durability and torque tests were conducted. And, with the test result of the comparison example 3 as the reference, the test results of the embodiments 1, 2 and comparison examples 1, 2 were evaluated in the form of the ratios thereof. The specific test contents of the durability and torque tests are as follows.

### [Durability Test]

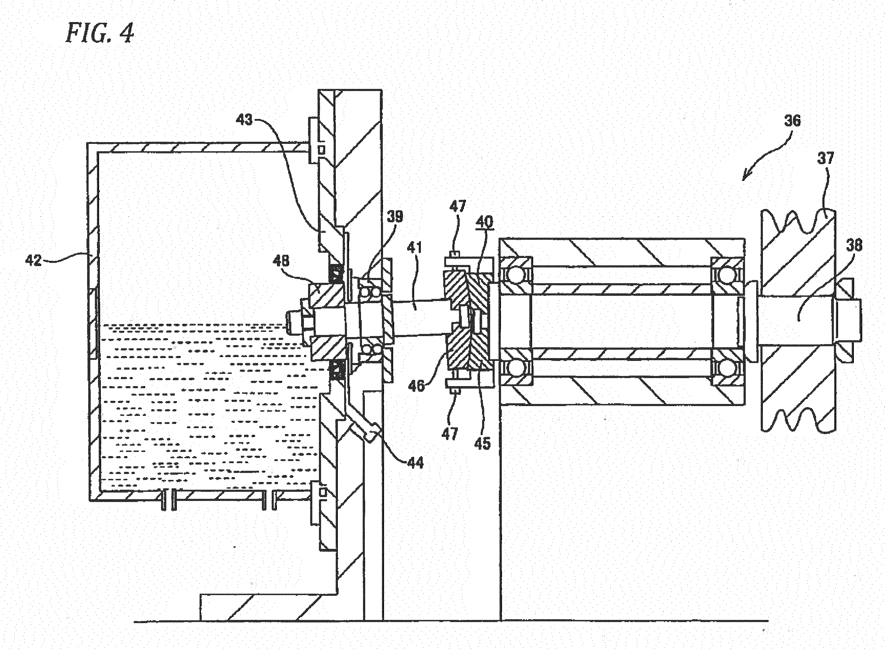

The durability test was conducted, using a seal component durability tester 36 shown in Fig. 4, assuming that the combination seal ring is immersed in salty mud slurry. The seal component durability tester 36 includes a support shaft 38 drivable by a pulley 37 into rotation, a precession generator 40 for converting rotation of the support shaft 38 to precession with the oscillation center of a self-aligning ball bearing 39 as the center thereof, a precession shaft 41 drivable by the precession generator 40, a tank 42 for storing the salty mud slurry, a housing 43 for holding samples, and a leak sensor 44 for detecting the salty mud slurry. The precession generator 40 includes a female part 45 which is fixed to the tip end of the support shaft 38 and the tip end face of which is formed as a concave surface with the oscillation center of the self-aligning ball bearing 39 as the center thereof, and a male part 46 which is fixed to the base end of the precession shaft 41 and the base end face of which is formed as a convex surface with the oscillation center of the self-aligning ball bearing 39 as the center thereof, while the concave and convex surfaces are contacted with each other. Also, in the multiple circumferential locations of the outside diameter side portion of the female part 45, there are provided diametrically arranged adjuster bolts 47, 47. By adjusting the diametrical projection amounts of the tip ends of the adjuster bolts 47, 47, the male part 46 can be moved by a specific amount along the concave surface of the female part 45, thereby enabling adjustment of the precession eccentric amount. And, while a sample externally fitted to the tip end of the precession shaft 41 through a slide part 48 was immersed in the salty mud slurry, the precession shaft 41 was spirally moved with the oscillation center of the self-aligning ball bearing 39 as the center thereof; and, the time taken until the leak sensor 44 detects leakage of the salty mud slurry from the sample was measured.

### [Test Conditions]

Rotational speed: 1000 min⁻¹
Shaft eccentricity: 0.4 mm TIR
{TIR (total indicated run out) means the whole shake amount including the eccentric amount, inclination degree and the like.}

Salty mud slurry compositions: 125g of Kanto loam powder and 50 g of salt are contained per 1 liter of water.

Water level of salty mud slurry: shaft center position
Cycle pattern: cycle of (immersion + rotation, 25 min.) → (immersion + rotation, 5 min.) → (dry + stop, 30 min.) → (dry + rotation, 60 min.) is repeated until water leakage is detected.

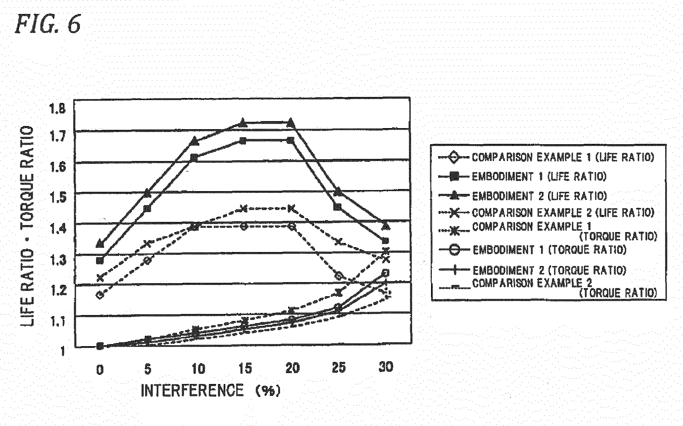

As can be understood from the test results of life ratios shown in Fig. 6, when the whole axial length of the free-state auxiliary seal lip 32 was restricted to the range of 5.5 - 7.5 times the thickness dimension, as compared to the comparison examples 1 and 2 out of this range, it was confirmed that the life of the combination seal ring can be extended regardless of the size of interference. Also, when the ratio of the axial interference of the auxiliary seal lip 32 was set larger than 20%, the life of the combination seal ring was worsened suddenly. This suggests that, when the interference ratio exceeded 20%, the tip end portion of the auxiliary seal lip 32 was deformed circumferentially relative to the base end portion, thereby reducing the interference substantially.

### [Torque Test]

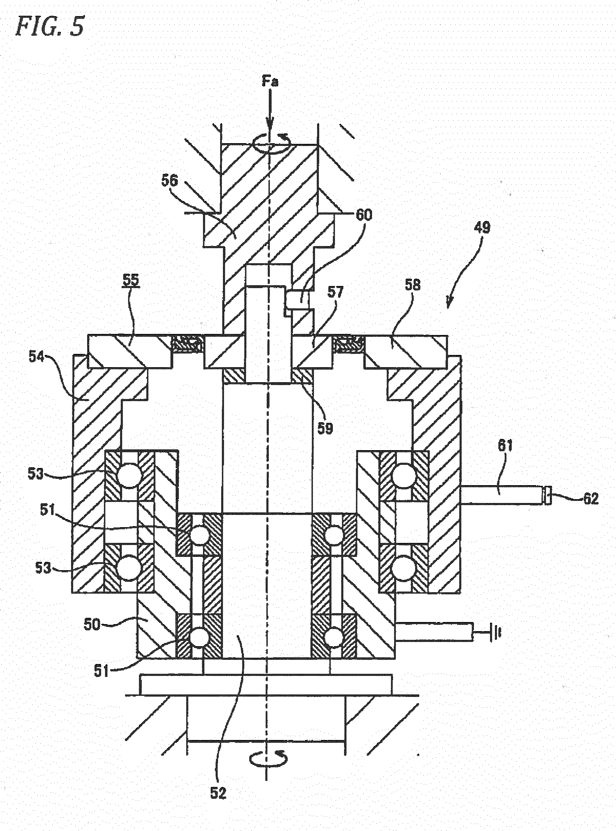

The torque test was conducted using a drag tester 49 shown in Fig. 5. The drag tester 49 includes a substantially cylindrical unrotatable intermediate housing 50, a rotation shaft 52 disposed inside the intermediate housing 50 and rotatably supported by a pair of inner support bearings 51, 51, a substantially cylindrical outside housing 54 disposed in the periphery of the intermediate housing 50 and rotatably supported by a pair of outer support bearings 53, 53, a mounting tool 55 for arranging a combination seal ring serving as a sample between the outside housing 54 and rotation shaft 52, and a cap member 56 for applying a load to the mounting tool 55 (inside plate 57) and driving the rotation shaft 52 into rotation. The mounting tool 55 includes an inside plate 57 externally fitted and fixed to the rotation shaft 52, and an outside plate 58 supported and fixed to the end face of the outside housing 54, while the sample can be arranged in an annular space between the inner peripheral surface of the outside plate 58 and the outer peripheral surface of the inside plate 57. And, between the axial side face of the inside plate 57 and the step surface of the rotation shaft 52, there is formed a spacer 59 for adjusting the interference of the sample. Also, on the opposite side of the spacer 59 across the inside plate 57, the cap member 56 is fixed to the end portion of the rotation shaft 52 by a set screw 60 such that they are prevented against mutual relative displacement. And, in a state where the combination seal ring serving as the sample was mounted on the mounting tool 55 of the thus-structured drag tester 49, when, while air cooling at room temperature, the rotation shaft 52 was rotated at 1000 min⁻¹, a tangential force (rotation torque) applied to the outside housing 54 was detected trough a measuring rod 61 by a load cell 62 and a value detected in a stable (saturated) state was considered as a measured value.

As can be understood from the test results of the torque ratios shown in Fig. 6, in the case that the whole axial length of the free-state auxiliary seal lip 32 was restricted to the range of 5.5 ~ 7.5 times the thickness dimension, it was confirmed that the torque is smaller than that of the comparison example 1 departing downward out of this range and is slightly larger than that of the comparison example 2 departing upward of this range. Also, it was confirmed that the more the ratio of the interference increases, the more the size of the torque increases; and, when the torque exceeds 20% (particularly, 25%) which is a value obtained when the life was worsened suddenly, the torque increasing ratio increases.

Although the present application has been described heretofore specifically with reference to the specific embodiment, it is obvious to persons skilled in the art that various changes and modifications are possible without departing from the spirit and scope of the invention.

The application is based on the JPA (PA No. 2013-102670) filed on May 15, 2013 and thus the contents thereof are incorporated herein for reference.

### INDUSTRIAL APPLICABILITY

The rolling bearing unit with a combination seal ring of the invention, most preferably, may be enforced as a rolling bearing unit for wheel supporting for supporting the wheel of a vehicle relative to a suspension from the viewpoint of ensuring the operations and effects thereof sufficiently. However, application of the invention is not limited to the rolling bearing unit for wheel supporting but, the invention can also be applied to other use so long as it has the need to prevent invasion of a foreign substance. Also, even in the case that the invention is applied to the rolling bearing unit for wheel supporting, when the rolling bearing unit for wheel supporting is incorporated into, for example, a semi floating type suspension, in some cases, axially inside and outside seal devices are both used as combination seal rings. In such cases, as the need arises, a combination seal ring having the characteristics of the invention is incorporated into the axial outside of the rolling bearing unit for wheel supporting as well. Thus, the axial inside and outside of the combination seal ring are reversed to the foregoing description. Further, the invention can also be applied to a rolling bearing unit with an outer ring rotation type seal ring. In this case, a slinger is fitted and fixed into an outside diameter side bearing ring member rotatable in use, while a seal ring is fitted and fixed onto an inside diameter side bearing ring member unrotatable even in use. Thus, the diametrical inside and outside are reversed to those shown in the drawings.

### DESCRIPTION OF REFERENCE NUMERALS AND SIGNS

1: rolling bearing unit
2: outer ring
3: hub
4: outer ring raceway
5: inner ring raceway
6: ball
7: cage
8: stationary side flange
9: rotation side flange
10: bearing internal space
11: seal ring
12, 12: combination seal ring
13: metal insert
14: elastic member
15a, 15b, 15c: seal lip
16: slinger
17, 17a: seal ring
18: rotation side cylindrical part
19: rotational side disk part
20, 20a: metal insert
21, 21a: elastic member
22a, 22b, 22c: seal lip
23: stationary side cylindrical part
24: stationary side disk part
25: encoder
26, 26a: seal internal space
27, 27a: labyrinth seal
28, 28a: entrance space
29: large thickness part
30: step surface
31: outside-diameter side curved surface
32: auxiliary seal lip
33: inside-diameter side curved surface
34: entrance small space
35: counter entrance small space
36: seal component durability tester
37: pulley
38: support shaft
39: self-aligning ball bearing
40: precession generator
41: precession shaft
42: tank
43: housing
44: leak sensor
45: female part
46: male part
47: adjuster bolt
48: slide part
49: drag tester
50: intermediate housing
51: inner support bearing
52: rotation shaft
53: outer support bearing
54: outside housing
55: mounting tool
56: cap member
57: inside plate
58: outside plate
59: spacer
60: setscrew
61: measuring rod
62: load cell

## Claims

1. A rolling bearing unit with a combination seal ring, comprising:
a rotation side bearing ring and a stationary side bearing ring rotatable relative to each other while they are arranged concentrically with each other;
a rotation side bearing ring formed in the peripheral surface of the rotation side bearing ring;
a stationary side bearing ring formed in such peripheral surface of the stationary side bearing ring as is opposed to the rotation side bearing ring;
multiple rolling elements rollably interposed between the rotation and stationary side bearing rings; and
a combination seal ring constituted of a slinger and a seal ring for closing the end opening of a bearing internal space intervening between the mutually opposed peripheral surfaces of the rotation and stationary side bearing rings, wherein:
the slinger is fitted and fixed to such part of the peripheral surface of the rotation side bearing ring as is opposed to the peripheral surface of the stationary side bearing ring, is formed by burring from a metal plate into an annular shape as a whole having an L-shaped section, includes a rotation side cylindrical part and a rotation side disk part bent diametrically from the rotation side cylindrical part toward the stationary side bearing ring, while the rotation side cylindrical part is fitted to the peripheral surface of the rotation side bearing ring to thereby fix the slinger to the rotation side bearing ring;
the seal ring is fitted and fixed to such part of the stationary side bearing ring as is opposed to the slinger, and includes a metal insert fitted and fixed to the stationary side bearing ring and an elastic member having its base end part supported by the metal insert and including multiple seal lips;
the metal insert is formed by burring from a metal plate into an annular shape as a whole having an L-shaped section, and includes a stationary side cylindrical part and a stationary side disk part bent diametrically from the axial end edge of the stationary side cylindrical part toward the rotation side bearing ring, while the stationary side cylindrical part is fitted to the peripheral surface of the stationary side bearing ring to thereby fix the metal insert to the stationary side bearing ring;
the tip ends of the respective seal lips are slide contacted with the whole periphery of the surface of the slinger, thereby forming a labyrinth seal between the tip end side peripheral edge of the rotation side disk part and the peripheral surface of the stationary side cylindrical part;
an auxiliary seal lip, having lower rigidity than at least a side lip providing a seal lip existing nearest to the labyrinth seal in the seal lips, is formed integrally with the elastic member in a portion of the base part of the elastic member as is nearer to the stationary side cylindrical part than the seal lips;
the tip end edge of the auxiliary seal lip is sliding contacted with or adjacently opposed to the whole periphery of the axial side surface of the rotation side disk part; and
the whole axial length of the auxiliary seal lip in its free state is set in the range of 5.5 ~ 7.5 times the thick dimension of the auxiliary seal lip.

2. A rolling bearing unit with a combination seal ring according to Claim 1, wherein a ratio of the axial interference of the auxiliary seal lip to the whole axial length of the free-state auxiliary seal lip is within the range of 0 ~ 20%.

3. A rolling bearing unit with a combination seal ring according to Claim 2, wherein the ratio of the interference is within the range of 10 ~ 20%.
